# EUROPEAN PATENT SPECIFICATION

(11) **EP 3 418 196 B1**
(45) Date of publication and mention of the grant of the patent: **04.08.2021**
(21) Application number: 18178784.7
(22) Date of filing: 20.06.2018
(51) Int. Cl.: B64D 27/24, F01D 15/10, B64D 27/02

(54) **PROPLUSION SYSTEM FOR AN AIRCRAFT**
ANTRIEBSSYSTEM FÜR EIN FLUGZEUG
SYSTÈME DE PROPULSION POUR AÉRONEF

(30) Priority: 23.06.2017 US 201715631094
(43) Date of publication of application: 26.12.2018
(73) Proprietor: General Electric Company, Schenectady, NY 12345 (US)
(72) Inventor: HON, Robert Charles, Cincinnati, OH Ohio 45215 (US); GANSLER, Michael Thomas, Cincinnati, OH Ohio 45215 (US)
(74) Representative: Openshaw & Co.

(56) References cited:
- EP-A1- 3 048 042
- DE-A1-102005 003 853

## Description

### FIELD

The present subject matter relates generally to a hybrid-electric aircraft propulsion system, and more particularly to a method for preventing or correcting a bowed rotor condition within a turbomachine of the hybrid-electric aircraft propulsion system.

### BACKGROUND

Typical aircraft propulsion systems include one or more gas turbine engines. For certain propulsion systems, the gas turbine engines generally include a fan and a core arranged in flow communication with one another. Additionally, the core of the gas turbine engine generally includes, in serial flow order, a compressor section, a combustion section, a turbine section, and an exhaust section. In operation, air is provided from the fan to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gases through the turbine section drives the turbine section and is then routed through the exhaust section, e.g., to atmosphere.

Conventionally, at least one turbine within the turbine section is coupled to a compressor within the compressor section through a rotatable shaft or spool. During the above operations of the gas turbine engine, a temperature of this spool may be relatively elevated due to its exposure or proximity to the combustion gases, in addition to heating due to compression of internal working gasses. Subsequent to operating the gas turbine engine, e.g., subsequent to flight operations of the gas turbine engine, the spool may no longer be rotated as combustion gases no longer flow through the turbine section to drive the turbine.

However, for at least a certain time period, the spool may remain at a relatively elevated temperature. The idle spool at relatively elevated temperatures is susceptible to bowing or other deformation (i.e., a "rotor bow" or "bowed rotor" condition) due to convection of gasses within the engine core. Specifically, when the core is not rotating, hot gasses tend to rise while cooler gasses tend to sink. Thus, a top of the engine is typically elevated in temperature relative to a bottom of the engine, when the engine is shutoff after operation. This temperature gradient across the stationary core causes uneven thermal growth or "thermal rotor bow." Note that thermal bow does not occur if the core is constantly rotating. Without external intervention, thermal rotor bow typically remains until the engine substantially cools over the course of several hours or more.

Attempting to restart a thermally bowed engine can result in a number of undesirable effects, including excessively high vibration and potential damaging contact between the rotor and engine case. In the event an engine restart is required prior to natural elimination of the thermal rotor bow, the spool may be rotated at a relatively low speed for a predetermined amount of time prior to igniting a combustion section of the gas turbine engine to correct the bowed rotor condition. With engines including a pneumatic starter, the pneumatic starter may be operated using pulse width modulation in an attempt to maintain a desired rotational speed of the spool below a nominal operating range of the pneumatic starter and within the range required for correcting the bowed rotor condition of the spool. However, such leads to relatively high operation cycles for the pneumatic starter, which may prematurely wear the pneumatic starter. Additionally, pulse width modulation control of a pneumatic starter can be problematic with respect to speed stability and pneumatic stability within the pneumatic supply system itself.

Accordingly, a propulsion system including one or more features capable of minimizing a risk of bowing or other deformation within a turbomachine would be useful. Additionally, or alternatively, a propulsion system having one or more features for correcting a bowed rotor condition without requiring high cycle wear on a starter would also be useful.

DE 10 2005 003853 A1 describes using a generator as a motor to drive a rotor of a turbine after switching off the gas turbine for a certain period of time.

EP 3 048042 describes a gas-electric hybrid aircraft.

### BRIEF DESCRIPTION

In one exemplary aspect of the present disclosure, a method for operating a turbomachine of a hybrid-electric propulsion system of an aircraft according to claim 1 is provided. Further optional features of this method are disclosed in the dependent claims 2-10.

In an exemplary embodiment of the present disclosure, a hybrid-electric propulsion system according to claim 11 is provided. Further optional features of this system are disclosed in dependent claims 12-14.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a top view of an aircraft according to various exemplary embodiments of the present disclosure.
FIG. 2 is a schematic, cross-sectional view of a gas turbine engine mounted to the exemplary aircraft of FIG. 1.
FIG. 3 is a schematic, cross-sectional view of an electric fan assembly in accordance with an exemplary embodiment of the present disclosure.
FIG. 4 is a flow diagram of a method of operating a hybrid electric propulsion system of an aircraft in accordance with an exemplary aspect of the present disclosure.
FIG. 5 is a chart illustrating one or more exemplary aspects of the present disclosure.
FIG. 6 is a flow diagram of a method of operating a hybrid electric propulsion system of an aircraft in accordance with another exemplary aspect of the present disclosure
FIG. 7 is a computing system according to example aspects of the present disclosure.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to a flow in a pathway. For example, with respect to a fluid flow, "upstream" refers to the direction from which the fluid flows, and "downstream" refers to the direction to which the fluid flows. However, the terms "upstream" and "downstream" as used herein may also refer to a flow of electricity.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a ten percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

The present disclosure is generally related to a method of operating a hybrid electric propulsion system of an aircraft in a manner to prevent or correct a bowed rotor condition of a turbomachine of the hybrid electric propulsion system. More specifically, the hybrid electric propulsion system, in addition to the turbomachine, includes an electric machine coupled to a high pressure system of the turbomachine and an electric energy storage unit. The electric energy storage unit, which may be a battery pack and/or any other suitable electric storage device, is electrically connectable to the electric machine to receive power from, and provide power to, the electric machine.

The hybrid electric propulsion system is generally operable in a flight operation mode, in a post flight operation mode, and in a pre-flight operation mode (e.g., a startup operating mode). During the flight operation mode, the turbomachine may rotate the electric machine to generate electrical power, at least a portion of which may be provided to the electric energy storage device, and if included, an electric propulsor assembly. By contrast, during one or both of the post flight operating mode or startup operating mode, the electric energy storage unit (or other electric power source, as described below) may provide electrical power to the electric machine, such that the electric machine rotates the high pressure system of the turbomachine to prevent or correct a bowed rotor condition.

For example, in certain exemplary aspects, immediately following a shutdown of the turbomachine, e.g., at the start of the post flight operating mode of the hybrid electric propulsion system, the electric energy storage unit may provide electrical power to rotate the high pressure system of the turbomachine to prevent a bowed rotor condition within the high pressure system of the turbomachine. The electric energy storage unit may provide electrical power to the electric machine to rotate the high pressure system of the electric machine for a predetermined amount of time to allow the high pressure system to cool below a temperature threshold (i.e., a threshold at which one or more components are susceptible to bowed rotor) before becoming idle.

Additionally, or alternatively, in other exemplary aspects, prior to igniting a combustion section of the turbomachine, e.g., during the startup operating mode of the hybrid electric propulsion system, the electric energy storage unit may provide electrical power to rotate the high pressure system in a predetermined manner for a predetermined amount of time to correct any bowed rotor condition of the high pressure system of the turbomachine. For example, the electric machine may rotate the high pressure system at a rotational speed between about ten percent of a maximum core speed of the turbomachine and about forty percent of the maximum core speed of the turbomachine for least, e.g., about twenty seconds.

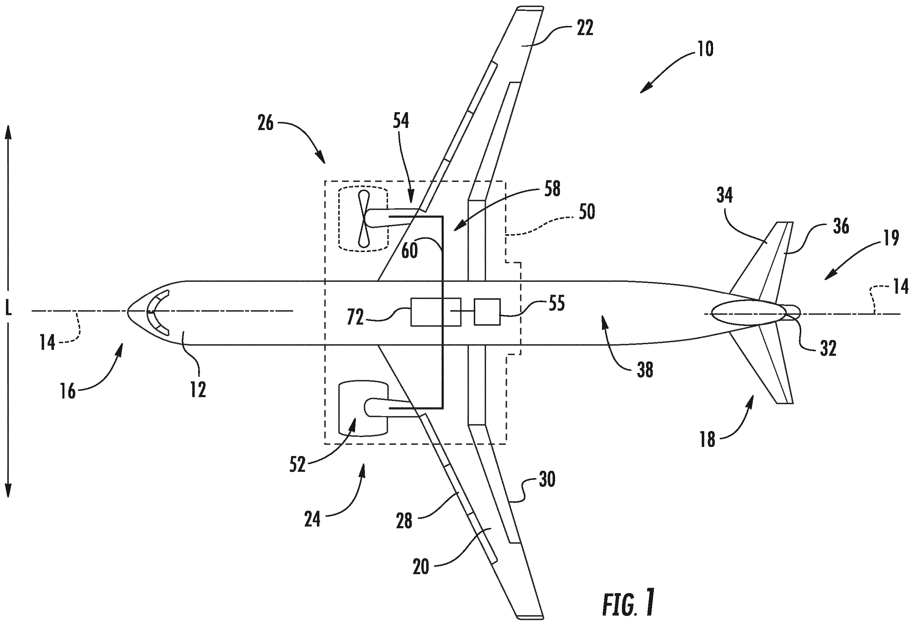

Referring now to the drawings, wherein identical numerals indicate the same elements throughout the figures, FIG. 1 provides a top view of an exemplary aircraft 10 as may incorporate various embodiments of the present disclosure. As shown in FIG. 1, the aircraft 10 defines a longitudinal centerline 14 that extends therethrough, a lateral direction L, a forward end 16, and an aft end 18. Moreover, the aircraft 10 includes a fuselage 12, extending longitudinally from the forward end 16 of the aircraft 10 to the aft end 18 of the aircraft 10, and an empennage 19 at the aft end of the aircraft 10. Additionally, the aircraft 10 includes a wing assembly including a first, port side wing 20 and a second, starboard side wing 22. The first and second wings 20, 22 each extend laterally outward with respect to the longitudinal centerline 14. The first wing 20 and a portion of the fuselage 12 together define a first side 24 of the aircraft 10, and the second wing 22 and another portion of the fuselage 12 together define a second side 26 of the aircraft 10. For the embodiment depicted, the first side 24 of the aircraft 10 is configured as the port side of the aircraft 10, and the second side 26 of the aircraft 10 is configured as the starboard side of the aircraft 10.

Each of the wings 20, 22 for the exemplary embodiment depicted includes one or more leading edge flaps 28 and one or more trailing edge flaps 30. The aircraft 10 further includes, or rather, the empennage 19 of the aircraft 10 includes, a vertical stabilizer 32 having a rudder flap (not shown) for yaw control, and a pair of horizontal stabilizers 34, each having an elevator flap 36 for pitch control. The fuselage 12 additionally includes an outer surface or skin 38. It should be appreciated however, that in other exemplary embodiments of the present disclosure, the aircraft 10 may additionally or alternatively include any other suitable configuration. For example, in other embodiments, the aircraft 10 may include any other configuration of stabilizer.

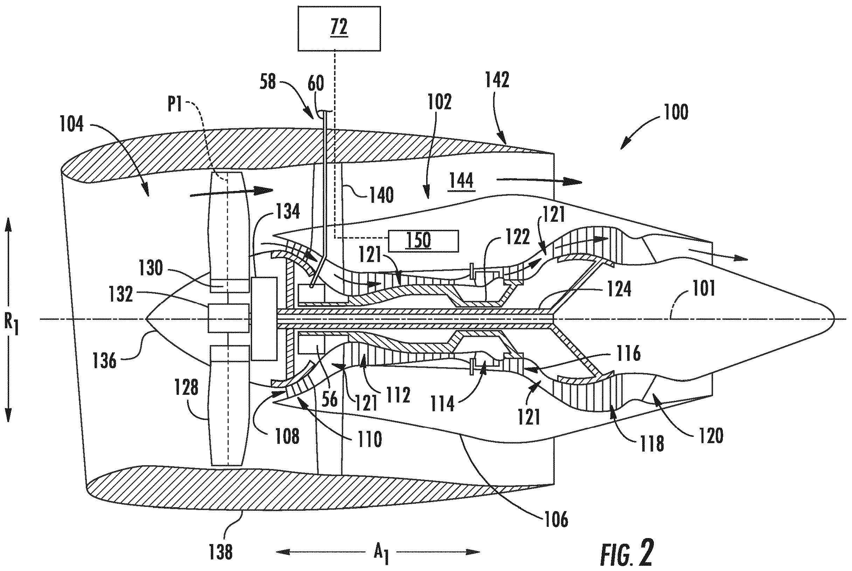

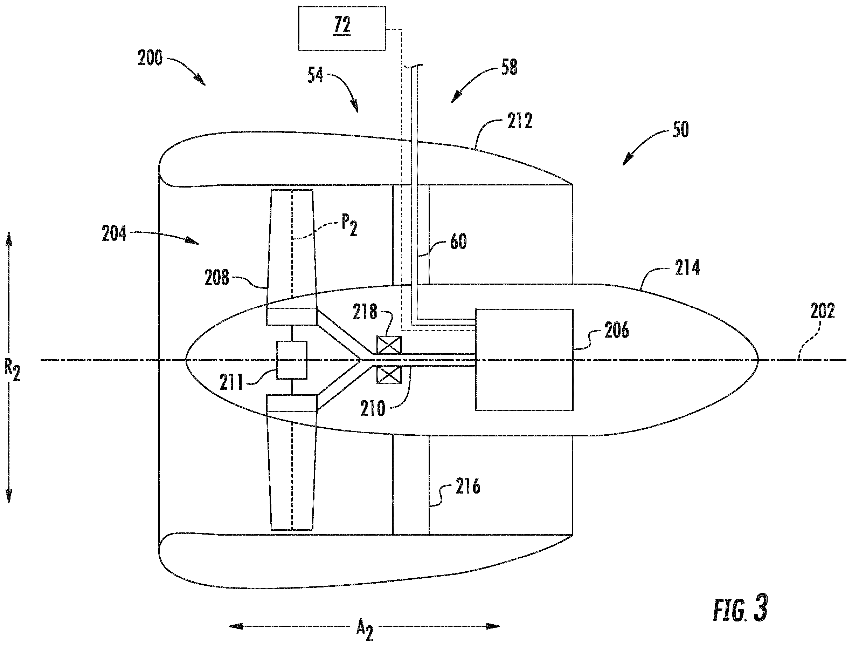

Referring now also to FIGS. 2 and 3, the exemplary aircraft 10 of FIG. 1 additionally includes a hybrid-electric propulsion system 50 having a first propulsor assembly 52 and a second propulsor assembly 54. FIG. 2 provides a schematic, cross-sectional view of the first propulsor assembly 52, and FIG. 3 provides a schematic, cross-sectional view of the second propulsor assembly 54. For the embodiment depicted, the first propulsor assembly 52 and second propulsor assembly 54 are each configured in an underwing-mounted configuration. However, as will be discussed below, one or both of the first and second propulsor assemblies 52, 54 may in other exemplary embodiments be mounted at any other suitable location.

Referring generally to FIGS. 1 through 3, the exemplary hybrid-electric propulsion system 50 generally includes the first propulsor assembly 52 having a turbomachine and a prime propulsor (which, for the embodiment of FIG. 2 are configured together as a gas turbine engine, or rather as a turbofan engine 100), an electric machine 56 (which for the embodiment depicted in FIG. 2 is an electric motor/generator) drivingly coupled to the turbomachine, the second propulsor assembly 54 (which for the embodiment of FIG. 3 is configured as an electric propulsor assembly 200 electrically connectable to the electric machine 56), an electric energy storage unit 55, a controller 72, and a power bus 58.The electric propulsor assembly 200, the electric energy storage unit 55, and the electric machine 56 are each electrically connectable to one another through one or more electric lines 60 of the power bus 58. For example, the power bus 58 may include various switches or other power electronics movable to selectively electrically connect the various components of the hybrid electric propulsion system 50. Additionally, the power bus 58 may further include power electronics, such as inverters, converters, rectifiers, etc., for conditioning or converting electrical power within the hybrid electric propulsion system 50.

As will be appreciated, the controller 72 may be configured to distribute electrical power between the various components of the hybrid-electric propulsion system 50. For example, the controller 72 maybe operable with the power bus 58 (including the one or more switches or other power electronics) to provide electrical power to, or draw electrical power from, the various components, such as the electric machine 56, to operate the hybrid electric propulsion system 50 between various operating modes and perform various functions. Such is depicted schematically as the electric lines 60 of the power bus 58 extending through the controller 72.

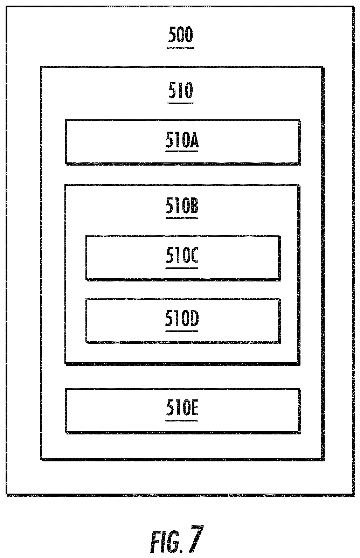

The controller 72 may be a stand-alone controller, dedicated to the hybrid-electric propulsion system 50, or alternatively, may be incorporated into one or more of a main system controller for the aircraft 10, a separate controller for the exemplary turbofan engine 100 (such as a full authority digital engine control system for the turbofan engine 100, also referred to as a FADEC), etc. For example, the controller 72 may be configured in substantially the same manner as the exemplary computing system 500 described below with reference to FIG. 7 (and may be configured to perform one or more of the functions of the exemplary method 300, described below).

Additionally, the electric energy storage unit 55 may be configured as one or more batteries, such as one or more lithium-ion batteries, or alternatively may be configured as any other suitable electrical energy storage devices. It will be appreciated that for the hybrid-electric propulsion system 50 described herein, the electric energy storage unit 55 is configured to store a relatively large amount of electrical power. For example, in certain exemplary embodiments, the electric energy storage unit may be configured to store at least about fifty kilowatt hours of electrical power, such as at least about sixty-five kilowatt hours of electrical power, such as at least about seventy-five kilowatts hours of electrical power, and up to about five hundred kilowatt hours of electrical power.

Referring now particularly to FIGS. 1 and 2, the first propulsor assembly 52 includes a gas turbine engine mounted, or configured to be mounted, to the first wing 20 of the aircraft 10. More specifically, for the embodiment of FIG. 2, the gas turbine engine includes a turbomachine 102 and a prime propulsor, the prime propulsor being a fan (referred to as "fan 104" with reference to FIG. 2). Accordingly, for the embodiment of FIG. 2, the gas turbine engine is configured as a turbofan engine 100.

The turbofan engine 100 defines an axial direction A1 (extending parallel to a longitudinal centerline 101 provided for reference) and a radial direction R1. As stated, the turbofan engine 100 includes the fan 104 and the turbomachine 102 disposed downstream from the fan 104.

The exemplary turbomachine 102 depicted generally includes a substantially tubular outer casing 106 that defines an annular inlet 108. The outer casing 106 encases, in serial flow relationship, a compressor section including a booster or low pressure (LP) compressor 110 and a high pressure (HP) compressor 112; a combustion section 114; a turbine section including a first, high pressure (HP) turbine 116 and a second, low pressure (LP) turbine 118; and a jet exhaust nozzle section 120. The compressor section, combustion section 114, and turbine section together define at least in part a core air flowpath 121 through the turbomachine 102.

The exemplary turbomachine 102 of the turbofan engine 100 additionally includes one or more shafts rotatable with at least a portion of the turbine section and, for the embodiment depicted, at least a portion of the compressor section. More particularly, for the embodiment depicted, the turbofan engine 100 includes a high pressure (HP) shaft or spool 122, which drivingly connects the HP turbine 116 to the HP compressor 112. Additionally, the exemplary turbofan engine 100 includes a low pressure (LP) shaft or spool 124, which drivingly connects the LP turbine 118 to the LP compressor 110.

Further, the exemplary fan 104 depicted is configured as a variable pitch fan having a plurality of fan blades 128 coupled to a disk 130 in a spaced apart manner. The fan blades 128 extend outwardly from disk 130 generally along the radial direction R1. Each fan blade 128 is rotatable relative to the disk 130 about a respective pitch axis PI by virtue of the fan blades 128 being operatively coupled to a suitable actuation member 132 configured to collectively vary the pitch of the fan blades 128. The fan 104 is mechanically coupled to the LP shaft 124, such that the fan 104 is mechanically driven by the second, LP turbine 118. More particularly, the fan 104, including the fan blades 128, disk 130, and actuation member 132, is mechanically coupled to the LP shaft 124 through a power gearbox 134, and is rotatable about the longitudinal axis 101 by the LP shaft 124 across the power gear box 134. The power gear box 134 includes a plurality of gears for stepping down the rotational speed of the LP shaft 124 to a more efficient rotational fan speed. Accordingly, the fan 104 is powered by an LP system (including the LP turbine 118) of the turbomachine 102.

Referring still to the exemplary embodiment of FIG. 2, the disk 130 is covered by rotatable front hub 136 aerodynamically contoured to promote an airflow through the plurality of fan blades 128. Additionally, the turbofan engine 100 includes an annular fan casing or outer nacelle 138 that circumferentially surrounds the fan 104 and/or at least a portion of the turbomachine 102. Accordingly, the exemplary turbofan engine 100 depicted may be referred to as a "ducted" turbofan engine. Moreover, the nacelle 138 is supported relative to the turbomachine 102 by a plurality of circumferentially-spaced outlet guide vanes 140. A downstream section 142 of the nacelle 138 extends over an outer portion of the turbomachine 102 so as to define a bypass airflow passage 144 therebetween.

Referring still to FIG. 2, the hybrid-electric propulsion system 50 additionally includes an electric machine 56, which for the embodiment depicted is configured as an electric motor/generator. The electric machine 56 is, for the embodiment depicted, positioned within the turbomachine 102 of the turbofan engine 100, inward of the core air flowpath 121, and is in mechanical communication with one of the shafts of the turbofan engine 100. More specifically, for the embodiment depicted, the electric machine is driven by the first, HP turbine 116 through the HP shaft 122. The electric machine 56 may be configured to convert mechanical power of the HP shaft 122 to electrical power, or alternatively the electric machine 56 may be configured to convert electrical power provided thereto into mechanical power for the HP shaft 122.

It should be appreciated, however, that in other exemplary embodiments, the electric machine 56 may instead be positioned at any other suitable location within the turbomachine 102 or elsewhere. For example, the electric machine 56 may be, in other embodiments, mounted coaxially with the HP shaft 122 within the turbine section, or alternatively may be offset from the HP shaft 122 and driven through a suitable gear train. Additionally, or alternatively, in other exemplary embodiments, the electric machine 56 may instead be powered by the LP system, i.e., by the LP turbine 118 through, e.g., the LP shaft 124, or by both the LP system (e.g., the LP shaft 124) and the HP system (e.g., the HP shaft 122) via a dual drive system. Additionally, or alternatively, still, in other embodiments, the electric machine 56 may include a plurality of electric machines, e.g., with one being drivingly connected to the LP system (e.g., the LP shaft 124) and one being drivingly connected to the HP system (e.g., the HP shaft 122). Further, although the electric machine 56 is described as an electric motor/generator, in other exemplary embodiments, the electric machine 56 may be configured solely as an electric motor, or solely as an electric generator.

Referring still to FIGS. 1 and 2, the turbofan engine 100 further includes a controller 150 and a plurality of sensors (not shown). The controller 150 maybe a full authority digital engine control system, also referred to as a FADEC. The controller 150 of the turbofan engine 100 may be configured to control operation of, e.g., the actuation member 132, the fuel delivery system, etc. Additionally, referring back also to FIG. 1, the controller 150 of the turbofan engine 100 is operably connected to the controller 72 of the hybrid-electric propulsion system 50. Moreover, as will be appreciated, the controller 72 may further be operably connected to one or more of the first propulsor assembly 52 (including controller 150), the electric machine 56, the second propulsor assembly 54, and the energy storage unit 55 through a suitable wired or wireless communication system (depicted in phantom).

It should further be appreciated that the exemplary turbofan engine 100 depicted in FIG. 2 may, in other exemplary embodiments, have any other suitable configuration. For example, in other exemplary embodiments, the fan 104 may not be a variable pitch fan, and further, in other exemplary embodiments, the LP shaft 124 may be directly mechanically coupled to the fan 104 (i.e., the turbofan engine 100 may not include the gearbox 134). Further, it should be appreciated that in other exemplary embodiments, the turbofan engine 100 may be configured as any other suitable gas turbine engine. For example, in other embodiments, the turbofan engine 100 may instead be configured as a turboprop engine, an unducted turbofan engine, a turbojet engine, a turboshaft engine, etc.

Referring now particularly to FIGS. 1 and 3, as previously stated the exemplary hybrid-electric propulsion system 50 additionally includes the second propulsor assembly 54 mounted, for the embodiment depicted, to the second wing 22 of the aircraft 10. Referring particularly to FIG. 3, the second propulsor assembly 54 is generally configured as an electric propulsor assembly 200 including an electric motor 206 and a propulsor/fan 204. The electric propulsor assembly 200 defines an axial direction A2 extending along a longitudinal centerline axis 202 that extends therethrough for reference, as well as a radial direction R2. For the embodiment depicted, the fan 204 is rotatable about the centerline axis 202 by the electric motor 206.

The fan 204 includes a plurality of fan blades 208 and a fan shaft 210. The plurality of fan blades 208 are attached to/rotatable with the fan shaft 210 and spaced generally along a circumferential direction of the electric propulsor assembly 200 (not shown). In certain exemplary embodiments, the plurality of fan blades 208 may be attached in a fixed manner to the fan shaft 210, or alternatively, the plurality of fan blades 208 may be rotatable relative to the fan shaft 210, such as in the embodiment depicted. For example, the plurality of fan blades 208 each define a respective pitch axis P2, and for the embodiment depicted are attached to the fan shaft 210 such that a pitch of each of the plurality of fan blades 208 may be changed, e.g., in unison, by a pitch change mechanism 211. Changing the pitch of the plurality of fan blades 208 may increase an efficiency of the second propulsor assembly 54 and/or may allow the second propulsor assembly 54 to achieve a desired thrust profile. With such an exemplary embodiment, the fan 204 may be referred to as a variable pitch fan.

Moreover, for the embodiment depicted, the electric propulsor assembly 200 depicted additionally includes a fan casing or outer nacelle 212, attached to a core 214 of the electric propulsor assembly 200 through one or more struts or outlet guide vanes 216. For the embodiment depicted, the outer nacelle 212 substantially completely surrounds the fan 204, and particularly the plurality of fan blades 208. Accordingly, for the embodiment depicted, the electric propulsor assembly 200 may be referred to as a ducted electric fan.

Referring still particularly to FIG. 3, the fan shaft 210 is mechanically coupled to the electric motor 206 within the core 214, such that the electric motor 206 drives the fan 204 through the fan shaft 210. The fan shaft 210 is supported by one or more bearings 218, such as one or more roller bearings, ball bearings, or any other suitable bearings. Additionally, the electric motor 206 may be an inrunner electric motor (i.e., including a rotor positioned radially inward of a stator), or alternatively may be an outrunner electric motor (i.e., including a stator positioned radially inward of a rotor), or alternatively, still, may be an axial flux electric motor (i.e., with the rotor neither outside the stator nor inside the stator, but rather offset from it along the axis of the electric motor).

As briefly noted above, the electrical power source (e.g., the electric machine 56 or the electric energy storage unit 55) is electrically connected with the electric propulsor assembly 200 (i.e., the electric motor 206) for providing electrical power to the electric propulsor assembly 200. More particularly, the electric motor 206 is in electrical communication with the electric machine 56 and/or the electric energy storage unit 55 through the electrical power bus 58, and more particularly through the one or more electrical cables or lines 60 extending therebetween.

It should be appreciated, however, that in other exemplary embodiments the exemplary hybrid-electric propulsion system 50 may have any other suitable configuration, and further, may be integrated into an aircraft 10 in any other suitable manner. For example, in other exemplary embodiments, the electric propulsor assembly 200 of the hybrid electric propulsion system 50 may instead be configured as a plurality of electric propulsor assemblies 200 and/or the hybrid electric propulsion system 50 may further include a plurality of gas turbine engines (such as turbofan engine 100) and electric machines 56. Further, in other exemplary embodiments, the electric propulsor assembly(ies) 200 and/or gas turbine engine(s) and electric machine(s) 56 may be mounted to the aircraft 10 at any other suitable location in any other suitable manner (including, e.g., tail mounted configurations).

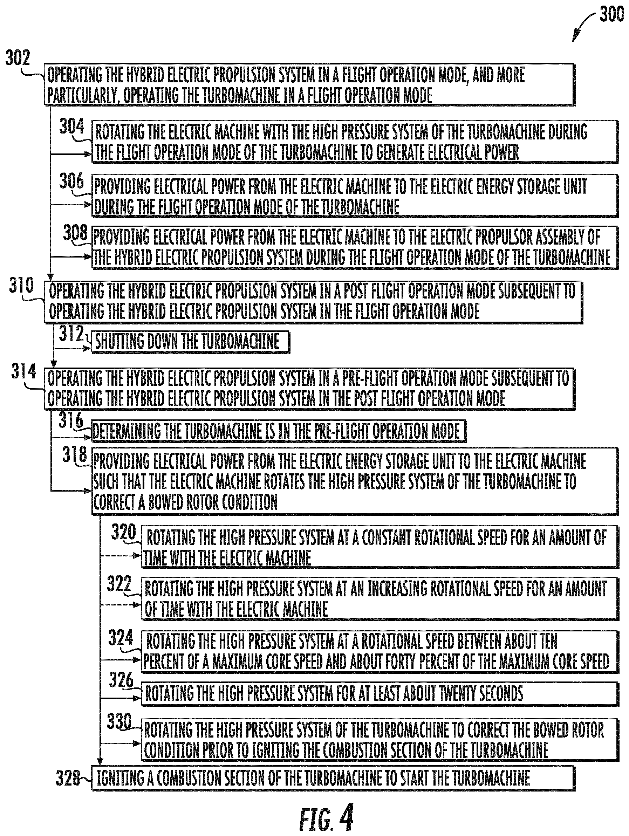

Referring now to FIG. 4, a method 300 for operating a turbomachine of a hybrid electric propulsion system of an aircraft in accordance with an exemplary aspect of the present disclosure is provided. The exemplary method 300 of FIG. 4 may be utilized with the exemplary turbomachine and hybrid electric propulsion systems described above with reference to FIGS. 1 through 3. For example, the hybrid electric propulsion system may include, in addition to the turbomachine, an electric machine coupled to a rotating system of the turbomachine, and an electric propulsor assembly. The electric machine may be coupled to an electric power source, which may be an electric energy storage unit of the hybrid electric propulsion system in certain aspects.

The exemplary method generally includes operating the hybrid electric propulsion system in an above-idle operation mode. More specifically, for the exemplary aspect of the method 300 depicted, the method 300 includes at (302) operating the hybrid electric propulsion system in a flight operation mode, and more particularly, operating the turbomachine in a flight operation mode. More particularly, still, operating the turbomachine in the flight operation mode includes at (304) rotating the electric machine with the turbomachine (e.g., with the high pressure system of the turbomachine) during the flight operation mode of the turbomachine to generate electrical power, and at (306) providing electrical power from the electric machine to the electric energy storage unit during the flight operation mode of the turbomachine (the high pressure system of the turbomachine rotating the electric machine to generate the electric power). Moreover, for the exemplary aspect depicted, operating the turbomachine in the flight operation mode further includes at (308) rotating a propulsor of the hybrid electric propulsion system utilizing at least in part the electrical power generated from the rotating of the electric machine with the turbomachine at (304) to provide a propulsive benefit for the aircraft during the flight operation mode of the turbomachine. The propulsor may be a propulsor of the electric propulsor assembly. According, rotating the propulsor of the hybrid electric propulsion system at (308) may include at (309) providing electrical power from the electric machine to the electric propulsor assembly of the hybrid electric propulsion system during the flight operation mode of the turbomachine. However, in other exemplary aspects, the propulsor may be any other suitable propulsor. For example, in certain exemplary aspects, the propulsor may be coupled to the turbomachine (configured together as, e.g., a turbofan engine) and rotating the propulsor at (308) may include providing electrical power to the electric machine from the electric energy storage unit (previously provided by the electric machine at (306)) to drive the electric machine and rotate the propulsor.

Regardless, it will be appreciated that rotating the electric machine with the turbomachine to generate electrical power at (304), providing electrical power from the electric machine to the electric energy storage unit at (306), and rotating a propulsor of the hybrid electric propulsion system at (308) may each only occur during at least a portion of the flight operation mode of the turbomachine, or during an entirety of the flight operation mode of the turbomachine. Accordingly, it will be appreciated that during operation of the hybrid electric propulsion system in the flight operation mode at (302) may generally include operating the hybrid electric propulsion system to generate a desired amount of thrust for the aircraft such that the aircraft may operate throughout a desired flight envelope (including, e.g., takeoff, cruise, descent, and landing).

Notably, however, in other exemplary aspects, the above-idle operation mode may be any other suitable operation mode in which the engine is operating above idle, and further that one or more of (304), (306), and (308) may occur in one or more of these other above-idle operations modes.

Referring still to FIG. 4, the method 300 further includes at (310) operating the hybrid electric propulsion system in a post flight operation mode subsequent to operating the hybrid electric propulsion system in the above-idle operation mode (i.e., the flight operation mode for the aspect depicted) at (302). For example, operating the hybrid electric propulsion system in the post flight operation mode at (310) includes, for the embodiment depicted, at (312) shutting down the turbomachine. Additionally, the method 300 includes at (314) operating the hybrid electric propulsion system in a pre-flight operation mode subsequent to operating the hybrid electric propulsion system in the post flight operation mode. Operating the hybrid electric propulsion system in the pre-flight operation mode at (314) may generally include performing any process in anticipation of starting up the hybrid electric propulsion system, including the turbomachine, prior to operating the hybrid electric propulsion of the in a subsequent flight operation mode.It will be appreciated, that for the exemplary aspect depicted, the terms "pre-flight operation mode" and "post flight operation mode" are used for convenience, and generally refer to any engine operation mode prior to an above-idle operation mode and any engine operation mode subsequent to an above-idle operation mode, respectively.

Moreover, the exemplary method 300 includes determining the turbomachine is in the post flight operation mode or in the pre-flight operation mode. More particularly, for the exemplary aspect of the method 300 depicted in FIG. 4, the method 300 includes at (316) determining the turbomachine is in the pre-flight operation mode.

Further, the exemplary method 300 includes providing electrical power from the electric power source to the electric machine such that the electric machine rotates the rotating system of the turbomachine to prevent or correct a bowed rotor condition. More specifically, for the exemplary aspect of the method 300 depicted, the method 300 includes providing electrical power from the electric energy storage unit to the electric machine such that the electric machine rotates the high pressure system of the turbomachine to prevent or correct a bowed rotor condition. Notably, however, in other exemplary aspects, the method 300 may provide electrical power to the electric machine from any other suitable power source (e.g., an auxiliary power unit, ground power source, etc.), and further the method 300 may rotate any other system of the turbomachine (e.g., a low pressure system).

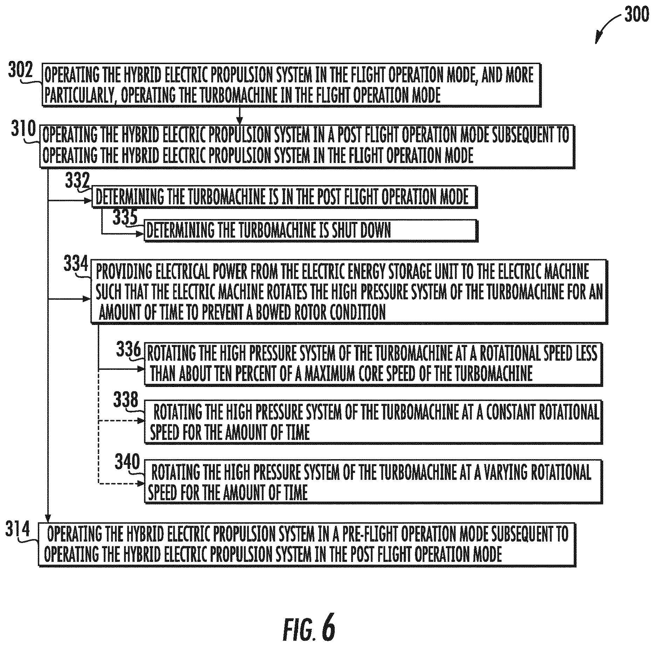

More specifically, it should be appreciated that the exemplary aspect of the method 300 depicted in FIG. 4 generally includes operating the hybrid electric propulsion assembly in a manner to correct a bowed rotor condition (compare to exemplary aspect of FIG. 6, below). For example, for the exemplary aspect of the method 300 depicted in FIG. 4, the method 300 includes at (318) providing electrical power from the electric energy storage unit to the electric machine such that the electric machine rotates the high pressure system of the turbomachine to correct a bowed rotor condition.

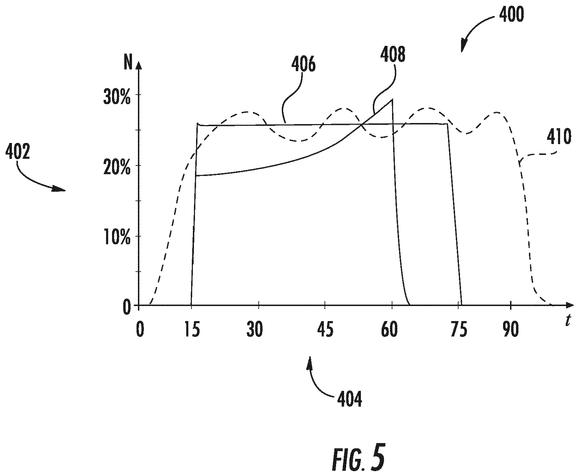

More particularly, referring still to FIG. 4, providing electrical power from the electric energy storage unit to the electric machine such that the electric machine rotates the high pressure system of the turbomachine to correct a bowed rotor condition at (318) includes at (320) rotating the high pressure system at a constant rotational speed for an amount of time with the electric machine. This aspect is however not part of the present invention and only described for illustration purpose. As is depicted in phantom, an embodiment of the invention providing electrical power from the electric energy storage unit to the electric machine such that the electric machine rotates the high pressure system of the turbomachine to correct a bowed rotor condition at (318) includes at (322) rotating the high pressure system at an increasing rotational speed for an amount of time with the electric machine. For example, with such an exemplary aspect, the electric machine may begin rotating the high pressure system at a relatively slow rotational speed, and may increase the rotational speed at which it rotates the high pressure system over time, to, e.g., more quickly correct a bowed rotor condition. This operation is also described below with reference to FIG. 5. Further, for the exemplary aspect of FIG. 4, providing electrical power from the electric energy storage unit to the electric machine such that the electric machine rotates the high pressure system of the turbomachine to correct a bowed rotor condition at (318) additionally includes at (324) rotating the high pressure system at a rotational speed between about ten percent of a maximum core speed and about forty percent of the maximum core speed. For example, in certain exemplary aspects, rotating the high pressure system at (324) may include rotating the high pressure system at a rotational speed between about twenty percent of the maximum core speed and about thirty percent of the maximum core speed. The maximum core speed may be a rotational speed of the high pressure system during operation of the turbomachine at a rated speed (i.e., at a maximum rated speed).

Further, still, for the exemplary aspect of FIG. 4, providing electrical power from the electric energy storage unit to the electric machine such that the electric machine rotates the high pressure system of the turbomachine to correct a bowed rotor condition at (318) additionally includes at (326) rotating the high pressure system for at least about twenty seconds. For example, rotating the high pressure system at (326) may include rotating the high pressure system for at least about thirty seconds, such as at least about one minute, such as for up to about ten minutes. It should be appreciated that in certain exemplary aspects, the amount of time the electric machine rotates the high pressure system of the turbomachine may be a predetermined or fixed amount of time, or alternatively may be a variable amount of time dependent on a real-time determination of an extent of the bowed rotor condition based on, e.g., various operating parameters of the hybrid electric propulsion system, or more specifically of the turbomachine. Alternatively, in other exemplary aspects, the amount of time the electric machine rotates the high pressure system of the turbomachine may be a fixed amount of time.

Moreover, for the exemplary aspect of FIG. 4, operating the hybrid electric propulsion system in the pre-flight operation mode at (314) further includes at (328) igniting a combustion section of the turbomachine to start the turbomachine. Accordingly, it should be appreciated, that for the exemplary aspect depicted in FIG. 4, providing electrical power from the electric energy storage unit to the electric machine such that the electric machine rotates the high pressure system of the turbomachine to correct a bowed rotor condition at (318) includes at (330) rotating the high pressure system of the turbomachine to correct the bowed rotor condition prior to igniting the combustion section of the turbomachine at (328).

Referring briefly now to FIG. 5, a chart 400 is provided illustrating an exemplary aspect of the exemplary method 300 described above with reference to FIG. 4. The exemplary chart 400 of FIG. 5 depicts a rotational speed of a high pressure system of a turbomachine on the y-axis 402 (i.e., a rotational speed as a percentage of a maximum rotational speed) and time in seconds on the x-axis 404. Specifically, the chart 400 depicts two exemplary aspects of the method 300. The first exemplary aspect, which is not part of the claimed invention, is represented by line 406 and shows the electric machine, which may be receiving electrical power from the electric energy storage unit, rotating the high pressure system at a substantially constant rotational speed of about twenty-five percent of the maximum rotational speed for about sixty seconds. In certain example aspects, such may be sufficient to correct most anticipated bowed rotor conditions. The second exemplary aspect, which is part of the present invention and represented by line 408, shows the electric machine, which again may be receiving electrical power from the electric energy storage unit, rotating the high pressure system of the turbomachine at an increasing rotational speed. More specifically, for the exemplary aspect depicted in FIG. 5, rotating the high pressure system with the electric machine at the increasing rotational speed includes rotating the high pressure system of the electric machine first at a rotational speed of about eighteen percent of the maximum rotational speed, and increasing the rotational speed up to about twenty-eight percent over the time period, i.e., about fifty seconds for the embodiment shown.

Further, line 410 is provided, depicted in phantom, to illustrate an improvement over prior configurations. Prior configurations rotated the high pressure system of the turbomachine using, e.g., a pneumatic starter. In order to rotate the high pressure system at a desired rotational speed, the pneumatic starter would need to operate using a pulse width modulation operation methodology. Such may lead to high operation cycles, potentially providing cycle stresses on the pneumatic starter and an associated control valve and electronics over time. As is depicted, utilizing the exemplary method 300 described above, the electric machine may rotate the high pressure system with more precision. For example, the electric machine may rotate high pressure system of the turbomachine at a substantially constant rotational speed (not part of the claimed invention), or at a gradually increasing rotational speed.

It should be appreciated, of course, that the exemplary rotational speeds and time durations depicted in FIG. 5 are provided by way of example only to illustrate certain exemplary aspects of the method 300 described above with reference to FIG. 4. In other exemplary aspects and embodiments, the method may rotate the high pressure system of the turbomachine at any other suitable rotational speed and for any other suitable amount of time to correct a bowed rotor condition. Notably, given the configuration described, in which an electric machine is motoring the high pressure system, the exemplary method may rotate the high pressure system at almost any desired speed. For example, the method may rotate the high pressure system at the rotational speeds shown in FIG. 5, or alternatively may rotate the high pressure system at speeds approaching zero, if desired (see, e.g., FIG. 6 and accompanying description).

It should further be appreciated that in other exemplary aspects of the present disclosure, the method 300 may be operated in any other suitable manner. For example, referring now to FIG. 6, another exemplary aspect of the method 300 for operating a turbomachine of a hybrid electric propulsion system of an aircraft is provided. The exemplary method 300 of FIG. 6 may be similar to the exemplary method of FIG. 4.

For example, the exemplary aspect of the method 300 depicted in FIG. 6 generally includes at (302) operating the hybrid electric propulsion system in an above-idle operation mode, and more particularly, operating the turbomachine in the above-idle operation mode, which is a flight operation mode for the aspect depicted. Additionally, the method 300 includes at (310) operating the hybrid electric propulsion system in a post flight operation mode subsequent to operating the hybrid electric propulsion system in the flight operation mode at (302), and at (314) operating the hybrid electric propulsion system in a pre-flight operation mode subsequent to operating the hybrid electric propulsion system in the post flight operation mode. It will be appreciated that in certain exemplary aspects, operating the hybrid electric propulsion system in the flight operation mode at (302) may include one or more of the steps identified above with reference to FIG. 4; operating the hybrid electric propulsion system in the post flight operation mode at (310) may also include one or more of the steps identified above with reference to FIG. 4; and operating the hybrid electric propulsion system in the pre-flight operation mode at (314) may further include one or more of the steps identified above with reference to FIG. 4.

However, for the exemplary aspect of FIG. 6, the method 300 generally includes operating the hybrid electric propulsion system in a manner to prevent a rotor bow condition within the turbomachine. For example, for the exemplary aspect of the method 300 depicted in FIG. 6, operating the hybrid electric propulsion system in the post flight operation mode at (310) further includes at (332) determining the turbomachine is in the post flight operation mode (which, for the embodiment depicted, includes at (335) determining the turbomachine is shut down), and at (334) providing electrical power from the electric energy storage unit to the electric machine such that the electric machine rotates the high pressure system of the turbomachine for an amount of time to prevent a bowed rotor condition.

It will be appreciated, that the amount of time the high pressure system of the turbomachine is rotated by the electric machine at (334) may be any suitable amount of time to allow the high pressure system of the turbomachine cool down below a temperature threshold at which the high pressure system, or rather, a high-pressure spool of the high pressure system, is susceptible to rotor bow. For example, in certain exemplary aspects, the amount of time may be a fixed or predetermined amount of time between about 20 minutes and about 8 hours, or alternatively may be an amount of time determined in response to a real-time determination of a temperature of one or more components within the turbomachine, such as one or more components of the high pressure system of the turbomachine.

Additionally, referring particularly to FIG. 6, providing electrical power from the electric energy storage unit to the electric machine such that the electric machine rotates the high pressure system of the turbomachine for the amount of time to prevent the bowed rotor condition at (334) includes at (336) rotating the high pressure system of the turbomachine at a rotational speed less than about ten percent of a maximum core speed of the turbomachine. For example, in certain exemplary aspects, rotating the high pressure system of the turbomachine at (336) may include rotating the high pressure system of the turbomachine at a rotational speed less than about five percent of the maximum core speed, such as less than about one percent of the maximum core speed, such as less than about ten revolutions per minute, such as less than about five revolutions per minute, such as at least about 0.1 revolutions per minute. Notably, it will be appreciated that rotating the high pressure system of the turbomachine in accordance with the present disclosure may include rotating the high pressure system at a minimal rotational speed of almost zero revolutions per minute (i.e., there is practically no limit as to how slow the high pressure system may be motored). This is due to the configuration described, in which an electric machine is driving the HP system, as opposed to a pneumatic system with inherent limitations in this regard.

In addition, for the exemplary aspect of the method 300 not being part of the present invention, but described for illustration purpose only and depicted in FIG. 6, providing electrical power from the electric energy storage unit to the electric machine such that the electric machine rotates the high pressure system of the turbomachine for the amount of time to prevent the bowed rotor condition at (334) further includes at (338) rotating the high pressure system of the turbomachine at a constant rotational speed for the amount of time. However, according to the invention, as is depicted in phantom, providing electrical power from the electric energy storage unit to the electric machine such that the electric machine rotates the high pressure system of the turbomachine for the amount of time to prevent the bowed rotor condition at (334) includes at (340) rotating the high pressure system of the turbomachine at a varying rotational speed for the amount of time. For example, in certain exemplary aspects rotating the high pressure system of the turbomachine at the varying rotational speed for the amount of time may include rotating the high pressure system of the turbomachine in a pulsed manner. More particularly, rotating the high pressure system of the turbomachine in a pulsed manner may include rotating the high pressure system for a certain amount of time, and then resting (i.e., not rotating) for amount of time. For example, rotating the high pressure system in a pulsed manner may include rotating for thirty seconds and resting for thirty seconds, repeatedly and sequentially, or rotating for one minute and resting for four minutes, repeatedly and sequentially. Other rotating patterns are contemplated as well.

It will be appreciated that in certain exemplary aspects of the exemplary method 300 depicted in FIGS. 4 and 6, providing electrical power from the electric energy storage unit to the electric machine such that the electric machine rotates the high pressure system of the turbomachine may include rotating the high pressure system of the turbomachine solely with the electric machine. Accordingly, in various of these exemplary aspects, the electric machine may rotate the high pressure system of the turbomachine to prevent or correct a rotor bow condition without assistance from, e.g., an auxiliary power unit, a pneumatic starter, a dedicated electric motor etc. Moreover, operating a hybrid electric propulsion system in accordance with one or more of the exemplary aspects described herein may allow for the hybrid electric propulsion system to prevent damage to the high pressure system of the turbomachine by preventing a bowed rotor condition. Additionally, operating a hybrid electric propulsion system in accordance with one or more of the exemplary aspects described herein may allow for the hybrid electric propulsion system to correct a bowed rotor within the high pressure system of the turbomachine. All of this may be done without inclusion of a dedicated engine turning motor, and without use of a dedicated starter motor, such as a dedicated pneumatic starter. Accordingly, such may lead to a lighter and more cost efficient propulsion system for the aircraft.

Referring now to FIG. 7, an example computing system 500 according to example embodiments of the present disclosure is depicted. The computing system 500 can be used, for example, as a controller 72 of a hybrid electric propulsion system 50. The computing system 500 can include one or more computing device(s) 510. The computing device(s) 510 can include one or more processor(s) 510A and one or more memory device(s) 510B. The one or more processor(s) 510A can include any suitable processing device, such as a microprocessor, microcontroller, integrated circuit, logic device, and/or other suitable processing device. The one or more memory device(s) 510B can include one or more computer-readable media, including, but not limited to, non-transitory computer-readable media, RAM, ROM, hard drives, flash drives, and/or other memory devices.

The one or more memory device(s) 510B can store information accessible by the one or more processor(s) 510A, including computer-readable instructions 510C that can be executed by the one or more processor(s) 510A. The instructions 510C can be any set of instructions that when executed by the one or more processor(s) 510A, cause the one or more processor(s) 510A to perform operations. In some embodiments, the instructions 510C can be executed by the one or more processor(s) 510A to cause the one or more processor(s) 510A to perform operations, such as any of the operations and functions for which the computing system 500 and/or the computing device(s) 510 are configured, the operations for operating a hybrid electric propulsion system of an aircraft (e.g, method 300), as described herein, and/or any other operations or functions of the one or more computing device(s) 510. Accordingly, it will be appreciated, that in certain exemplary aspects, the exemplary method 300 described above with reference to FIGS. 4 through 6 maybe a computer-implemented method, such that one or more of the respective steps described above are implemented using one or more computing devices. The instructions 510C can be software written in any suitable programming language or can be implemented in hardware. Additionally, and/or alternatively, the instructions 510C can be executed in logically and/or virtually separate threads on processor(s) 510A. The memory device(s) 510B can further store data 510D that can be accessed by the processor(s) 510A. For example, the data 510D can include data indicative of operation modes of the hybrid electric propulsion system, power reserve levels of an electric energy storage unit, rotational speeds of one or more shafts or spools of the turbomachine, and/or one or more loads on the one or more shafts or spools of the turbomachine.

The computing device(s) 510 can also include a network interface 510E used to communicate, for example, with the other components of system 500 (e.g., via a network). The network interface 510E can include any suitable components for interfacing with one or more network(s), including for example, transmitters, receivers, ports, controllers, antennas, and/or other suitable components. One or more external display devices (not depicted) can be configured to receive one or more commands from the computing device(s) 510. The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

This written description uses examples to disclose the invention, including the best mode, and also to enable any person skilled in the art to practice the invention, including making and using any devices or systems and performing any incorporated methods. The patentable scope of the invention is defined by the claims. Other examples are intended to be within the scope of the claims if they include structural elements that do not differ from the literal language of the claims.

## Claims

1. A method (300) for operating a turbomachine of a hybrid-electric propulsion system (50) of an aircraft (10), the hybrid-electric propulsion system (50) comprising an electric machine (56) coupled to a rotating system of the turbomachine, the electric machine (56) electrically coupled to an electric power source (55), the method comprising:
rotating the electric machine (56) with the turbomachine to generate electrical power during a flight operation mode of the turbomachine;
rotating a propulsor (200) of the hybrid electric propulsion system (50) utilizing at least in part the electrical power generated from the rotating of the electric machine (56) with the turbomachine to provide a propulsive benefit for the aircraft (10) during the flight operation mode of the turbomachine;
determining the turbomachine is in a post flight operation mode or in a pre-flight operation mode; and
providing electrical power from the electric power source (55) to the electric machine (56) such that the electric machine (56) rotates the rotating system of the turbomachine at a varying rotational speed to prevent or correct a bowed rotor condition.

2. The method of claim 1, wherein determining the turbomachine is in the post flight operation mode or in the pre-flight operation mode comprises determining the turbomachine is in the pre-flight operation mode, and wherein providing electrical power from the electric power source (55) to the electric machine (56) comprises providing electrical power from the electric power source (55) to the electric machine (56) such that the electric machine (56) rotates the rotating system of the turbomachine to correct a bowed rotor condition.

3. The method of claim 1 or 2, wherein providing electrical power from the electric power source (55) to the electric machine (56) such that the electric machine (56) rotates the rotating system of the turbomachine at a varying rotational speed comprises rotating the rotating system at an increasing rotational speed for an amount of time.

4. The method of any of claims 2 or 3, wherein providing electrical power from the electric power source (55) to the electric machine (56) such that the electric machine (56) rotates the rotating system of the turbomachine at a varying rotational speed comprises rotating the rotating system at a rotational speed between ten percent of a maximum core speed and forty percent of a maximum core speed.

5. The method of any of claims 2 or 3, wherein providing electrical power from the electric power source (55) to the electric machine (56) such that the electric machine (56) rotates the rotating system of the turbomachine at a varying rotational speed comprises rotating the rotating system of the turbomachine to correct the bowed rotor condition prior to igniting a combustion section of the turbomachine.

6. The method of any of claims 2 to 5, wherein providing electrical power from the electric power source (55) to the electric machine (56) such that the electric machine (56) rotates the rotating system of the turbomachine at varying rotational speed comprises rotating the rotating system for at least about twenty seconds.

7. The method of any preceding claim, wherein determining the engine is in the post flight operation mode or in the pre-flight operation mode comprises determining the turbomachine is in the post flight operation mode, and wherein providing electrical power from the electric power source (55) to the electric machine (56) comprises rotating the rotating system of the turbomachine for an amount of time to prevent a bowed rotor condition.

8. The method of any preceding claim, wherein providing electrical power from the electric power source (55) to the electric machine (56) such that the electric machine (56) rotates the rotating system of the turbomachine at a varying rotational speed comprises rotating the rotating system of the turbomachine solely with the electric machine (56).

9. The method of any preceding claim, wherein rotating the propulsor (200) of the hybrid electric propulsion system (50) utilizing at least in part the electrical power generated from the rotating of the electric machine (56) with the turbomachine comprises providing electrical power from the electric machine (56) to an electric propulsor assembly (200) of the hybrid electric propulsion system (50) during the flight operation mode of the turbomachine.

10. The method of any preceding claim, wherein the rotating system of the turbomachine is a high pressure system of the turbomachine, and wherein the electric power source (55) is an electric energy storage unit (55) of the hybrid-electric propulsion system.

11. A hybrid-electric propulsion system (50) comprising:
a turbomachine comprising a high pressure system, the high pressure system including a high pressure turbine drivingly coupled to a high pressure compressor through a high pressure spool;
an electric machine (56) coupled to the high pressure system;
an electric energy storage unit (55) electrically connectable to the electric machine; and
a controller (72) configured to electrically connect the electric energy storage unit (55) and the electric machine (56) to provide electrical power from the electric machine (56) to the electric energy storage unit (55) during a flight operation mode of the turbomachine and further configured to provide electrical power from the electric energy storage unit (55) to the electric machine (56) to drive the electric machine (56) such that the electric machine (56) drives the high pressure system at a varying rotational speed to prevent or correct a bowed rotor condition during a post flight operation mode or a pre-flight operation mode of the turbomachine.

12. The hybrid-electric propulsion system (50) of claim 11, further comprising:
an electric propulsor assembly (200) electrically connectable to the electric machine (56), wherein the controller (72) is further configured to provide the electric propulsor assembly (200) with electrical power from one or both of the electric machine (56) and the electric energy storage unit (55) during the flight operation mode of the turbomachine.

13. The hybrid-electric propulsion system (50) of claim 11 or 12, wherein the controller (72) is further configured to provide electrical power from the electric energy storage unit (55) to the electric machine (56) to drive the electric machine (56) and correct a bowed rotor condition during the pre-flight operation mode.

14. The hybrid-electric propulsion system (50) of any of claims 11 to 13, wherein in providing electrical power from the electric energy storage unit (55) to the electric machine (56) to drive the electric machine (56) and prevent or correct a bowed rotor condition, the controller (72) is configured to rotate the high pressure system of the turbomachine solely with the electric machine (56).

## Patentansprüche

1. Verfahren (300) zum Betreiben einer Turbomaschine eines hybrid-elektrischen Propulsionssystems (50) eines Flugzeugs (10), wobei das hybrid-elektrische Propulsionssystem (50) eine elektrische Maschine (56) umfasst, die mit einem rotierenden System der Turbomaschine gekoppelt ist, wobei die elektrische Maschine (56) elektrisch mit einer elektrischen Leistungsquelle (55) gekoppelt ist, wobei das Verfahren Folgendes umfasst:
Rotieren der elektrischen Maschine (56) mit der Turbomaschine, um während eines Flugbetriebsmodus der Turbomaschine elektrische Leistung zu erzeugen;
Rotieren eines Propulsors (200) des hybrid-elektrischen Propulsionssystems (50) unter Verwenden mindestens eines Teils der elektrischen Leistung, der durch das Rotieren der elektrischen Maschine (56) mit der Turbomaschine erzeugt wird, um während des Flugbetriebsmodus der Turbomaschine einen propulsiven Vorteil für das Flugzeug (10) bereitzustellen;
Bestimmen, dass sich die Turbomaschine in einem Betriebsmodus nach dem Flug oder in einem Betriebsmodus vor dem Flug befindet; und
Bereitstellen von elektrischer Leistung von der elektrischen Leistungsquelle (55) an die elektrische Maschine (56), derart, dass die elektrische Maschine (56) das rotierende System der Turbomaschine mit einer variierenden Rotationsdrehzahl rotiert, um einen verbogenen Rotorzustand zu verhindern oder zu korrigieren.

2. Verfahren nach Anspruch 1, wobei das Bestimmen, dass sich die Turbomaschine im Betriebsmodus nach dem Flug oder im Betriebsmodus vor dem Flug befindet, das Bestimmen umfasst, dass sich die Turbomaschine im Betriebsmodus vor dem Flug befindet, und wobei das Bereitstellen von elektrischer Leistung von der elektrischen Leistungsquelle (55) an die elektrische Maschine (56) das Bereitstellen von elektrischer Leistung von der elektrischen Leistungsquelle (55) an die elektrische Maschine (56) derart umfasst, dass die elektrische Maschine (56) das Rotationssystem der Turbomaschine rotiert, um einen verbogenen Rotorzustand zu korrigieren.

3. Verfahren nach Anspruch 1 oder 2, wobei das Bereitstellen von elektrischer Leistung von der elektrischen Stromquelle (55) an die elektrische Maschine (56), derart, dass die elektrische Maschine (56) das Rotationssystem der Turbomaschine mit einer variierenden Rotationsgeschwindigkeit rotiert, das Rotieren des rotierenden Systems mit einer ansteigenden Rotationsgeschwindigkeit für eine Zeitspanne umfasst.

4. Verfahren nach einem der Ansprüche 2 oder 3, wobei das Bereitstellen von elektrischer Leistung von der elektrischen Leistungsquelle (55) an die elektrische Maschine (56) derart, dass die elektrische Maschine (56) das Rotationssystem der Turbomaschine mit einer variierenden Rotationsdrehzahl rotiert, das Rotieren des Rotationssystems mit einer Rotationsdrehzahl zwischen zehn Prozent einer maximalen Kerndrehzahl und vierzig Prozent einer maximalen Kerndrehzahl umfasst.

5. Verfahren nach einem der Ansprüche 2 oder 3, wobei das Bereitstellen von elektrischer Leistung von der elektrischen Leistungsquelle (55) an die elektrische Maschine (56) derart, dass die elektrische Maschine (56) das Rotationssystem der Turbomaschine mit einer variierenden Rotationsdrehzahl rotiert, das Rotieren des Rotationssystems der Turbomaschine umfasst, um den verbogenen Rotorzustands vor dem Zünden eines Verbrennungsbereichs der Turbomaschine zu korrigieren.

6. Verfahren nach einem der Ansprüche 2 bis 5, wobei das Bereitstellen von elektrischer Leistung von der elektrischen Leistungsquelle (55) an die elektrische Maschine (56) derart, dass die elektrische Maschine (56) das Rotationssystem der Turbomaschine mit variierender Rotationsdrehzahl rotiert, das Rotieren des Rotationssystems für mindestens etwa zwanzig Sekunden umfasst.

7. Verfahren nach einem der vorhergehenden Ansprüche, wobei das Bestimmen, dass sich das Triebwerk im Betriebsmodus nach dem Flug oder im Betriebsmodus vor dem Flug befindet, das Bestimmen umfasst, dass sich die Turbomaschine im Betriebsmodus nach dem Flug befindet, und wobei das Bereitstellen von elektrischer Leistung von der elektrischen Leistungsquelle (55) an die elektrische Maschine (56) das Rotieren des Rotationssystems der Turbomaschine für eine Zeitspanne umfasst, um einen verbogenen Rotorzustand zu verhindern.

8. Verfahren nach einem der vorhergehenden Ansprüche, wobei das Bereitstellen von elektrischer Leistung von der elektrischen Leistungsquelle (55) an die elektrische Maschine (56) derart, dass die elektrische Maschine (56) das Rotationssystem der Turbomaschine mit einer variierenden Rotationsdrehzahl rotiert, das Rotieren des Rotationssystems der Turbomaschine ausschließlich mit der elektrischen Maschine (56) umfasst.

9. Verfahren nach einem der vorhergehenden Ansprüche, wobei das Rotieren des Propulsors (200) des hybrid-elektrischen Propulsionssystems (50) unter Verwendung mindestens eines Teils der elektrischen Leistung, die durch das Rotieren der elektrischen Maschine (56) mit der Turbomaschine erzeugt wird, das Bereitstellen von elektrischer Leistung von der elektrischen Maschine (56) an eine elektrische Propulsoranordnung (200) des hybrid-elektrischen Propulsionssystems (50) während des Flugbetriebsmodus der Turbomaschine umfasst.

10. Verfahren nach einem der vorhergehenden Ansprüche, wobei das Rotationssystem der Turbomaschine ein Hochdrucksystem der Turbomaschine ist, und wobei die elektrische Leistungsquelle (55) eine elektrische Energiespeichereinheit (55) des hybrid-elektrischen Propulsionssystems ist.

11. Hybrid-elektrisches Propulsionssystem (50), das Folgendes umfasst:
eine Turbomaschine, die ein Hochdrucksystem umfasst, wobei das Hochdrucksystem eine Hochdruckturbine enthält, die antriebsmäßig über eine Hochdruckspule mit einem Hochdruckverdichter gekoppelt ist;
eine elektrische Maschine (56), die mit dem Hochdrucksystem gekoppelt ist;
eine elektrische Energiespeichereinheit (55), die elektrisch mit der elektrischen Maschine verbunden werden kann; und
eine Steuerung (72), die so konfiguriert ist, dass sie die elektrische Energiespeichereinheit (55) und die elektrische Maschine (56) elektrisch verbindet, um während eines Flugbetriebsmodus der Turbomaschine elektrische Leistung von der elektrischen Maschine (56) an die elektrische Energiespeichereinheit (55) bereitzustellen, und ferner so konfiguriert ist, dass sie elektrische Leistung von der elektrischen Energiespeichereinheit (55) an die elektrische Maschine (56) bereitstellt, um die elektrische Maschine (56) derart anzutreiben, dass die elektrische Maschine (56) das Hochdrucksystem mit einer variierenden Rotationsdrehzahl antreibt, um einen verbogenen Rotorzustand während eines Betriebsmodus nach dem Flug oder eines Betriebsmodus vor dem Flug der Turbomaschine zu verhindern oder zu korrigieren.

12. Hybrid-elektrisches Propulsionssystem (50) nach Anspruch 11, das ferner Folgendes umfasst:
eine elektrische Propulsoranordnung (200), die elektrisch mit der elektrischen Maschine (56) verbunden werden kann, wobei die Steuerung (72) ferner so konfiguriert ist, dass sie der elektrischen Propulsoranordnung (200) während des Flugbetriebsmodus der Turbomaschine elektrische Leistung von der elektrischen Maschine (56) oder der elektrischen Energiespeichereinheit (55) oder beiden bereitstellt.

13. Hybrid-elektrisches Propulsionssystem (50) nach Anspruch 11 oder 12, wobei die Steuerung (72) ferner so konfiguriert ist, dass sie elektrische Leistung von der elektrischen Energiespeichereinheit (55) an die elektrische Maschine (56) bereitstellt, um die elektrische Maschine (56) anzutreiben und einen verbogenen Rotorzustand während des Betriebsmodus vor dem Flug zu korrigieren.

14. Hybrid-elektrisches Propulsionssystem (50) nach einem der Ansprüche 11 bis 13, wobei beim Bereitstellen von elektrischer Leistung aus der elektrischen Energiespeichereinheit (55) an die elektrische Maschine (56) zum Antreiben der elektrischen Maschine (56) und zum Verhindern oder Korrigieren eines verbogenen Rotorzustands die Steuerung (72) so konfiguriert ist, dass sie das Hochdrucksystem der Turbomaschine ausschließlich mit der elektrischen Maschine (56) rotiert.

## Revendications

1. Procédé (300) de fonctionnement d'une turbomachine d'un système de propulsion hybride-électrique (50) d'un aéronef (10), le système de propulsion hybride-électrique (50) comprenant une machine électrique (56) accouplée à un système rotatif de la turbomachine, la machine électrique (56) étant couplée électriquement à une source d'alimentation électrique (55), le procédé comprenant :
la rotation de la machine électrique (56) avec la turbomachine pour générer de l'énergie électrique pendant un mode de fonctionnement en vol de la turbomachine ;
la rotation d'un propulseur (200) du système de propulsion hybride-électrique (50) utilisant au moins en partie l'énergie électrique générée par la rotation de la machine électrique (56) avec la turbomachine pour fournir un avantage propulsif pour l'aéronef (10) pendant le mode de fonctionnement en vol de la turbomachine ;
la détermination du fait que la turbomachine est dans un mode de fonctionnement après vol ou dans un mode de fonctionnement avant vol ; et
la fourniture d'énergie électrique de la source d'alimentation électrique (55) à la machine électrique (56) de telle sorte que la machine électrique (56) fasse tourner le système rotatif de la turbomachine à une vitesse de rotation variable pour empêcher ou corriger une condition de rotor courbé.

2. Procédé selon la revendication 1, dans lequel la détermination du fait que la turbomachine est dans le mode de fonctionnement après vol ou dans le mode de fonctionnement avant vol comprend la détermination du fait que la turbomachine est dans le mode de fonctionnement avant vol, et dans lequel la fourniture d'énergie électrique de la source d'alimentation électrique (55) à la machine électrique (56) comprend la fourniture d'énergie électrique de la source d'alimentation électrique (55) à la machine électrique (56) de telle sorte que la machine électrique (56) fait tourner le système rotatif de la turbomachine pour corriger une condition de rotor courbé.

3. Procédé selon la revendication 1 ou 2, dans lequel la fourniture d'énergie électrique de la source d'alimentation électrique (55) à la machine électrique (56) de telle sorte que la machine électrique (56) fait tourner le système rotatif de la turbomachine à une vitesse de rotation variable comprend la rotation du système rotatif à une vitesse de rotation croissante pendant un certain temps.

4. Procédé selon l'une quelconque des revendications 2 ou 3, dans lequel la fourniture d'énergie électrique de la source d'alimentation électrique (55) à la machine électrique (56) de telle sorte que la machine électrique (56) fait tourner le système rotatif de la turbomachine à une vitesse de rotation variable comprend la rotation du système rotatif à une vitesse de rotation comprise entre dix pour cent d'une vitesse de noyau maximale et quarante pour cent d'une vitesse de noyau maximale.

5. Procédé selon l'une quelconque des revendications 2 ou 3, dans lequel la fourniture d'énergie électrique de la source d'alimentation électrique (55) à la machine électrique (56) de telle sorte que la machine électrique (56) fait tourner le système rotatif de la turbomachine à une vitesse de rotation variable comprend la rotation du système rotatif de la turbomachine pour corriger l'état du rotor courbé avant d'allumer une section de combustion de la turbomachine.

6. Procédé selon l'une quelconque des revendications 2 à 5, dans lequel la fourniture d'énergie électrique de la source d'alimentation électrique (55) à la machine électrique (56) de telle sorte que la machine électrique (56) fait tourner le système rotatif de la turbomachine à une vitesse de rotation variable comprend la rotation du système de rotation pendant au moins une vingtaine de secondes.

7. Procédé selon l'une quelconque des revendications précédentes, dans lequel la détermination du fait que le moteur est dans le mode de fonctionnement après vol ou dans le mode de fonctionnement avant vol comprend la détermination du fait que la turbomachine est dans le mode de fonctionnement après vol, et dans lequel la fourniture d'énergie électrique de la source d'alimentation électrique (55) à la machine électrique (56) comprend la rotation du système rotatif de la turbomachine pendant un certain temps pour éviter une condition de rotor courbé.

8. Procédé selon l'une quelconque des revendications précédentes, dans lequel la fourniture d'énergie électrique de la source d'alimentation électrique (55) à la machine électrique (56) de telle sorte que la machine électrique (56) fait tourner le système rotatif de la turbomachine à une vitesse de rotation variable comprend la rotation du système rotatif de la turbomachine uniquement avec la machine électrique (56).

9. Procédé selon l'une quelconque des revendications précédentes, dans lequel la rotation du propulseur (200) du système de propulsion hybride-électrique (50) utilisant au moins en partie l'énergie électrique générée par la rotation de la machine électrique (56) avec la turbomachine comprend la fourniture d'énergie électrique de la machine électrique (56) à un ensemble propulseur électrique (200) du système de propulsion hybride-électrique (50) pendant le mode de fonctionnement en vol de la turbomachine.

10. Procédé selon l'une quelconque des revendications précédentes, dans lequel le système rotatif de la turbomachine est un système haute pression de la turbomachine, et dans lequel la source d'alimentation électrique (55) est une unité de stockage d'énergie électrique (55) du système de propulsion hybride-électrique.

11. Système de propulsion hybride-électrique (50) comprenant :
une turbomachine comprenant un système haute pression, le système haute pression comportant une turbine haute pression accouplée en entraînement à un compresseur haute pression par l'intermédiaire d'un corps haute pression ;
une machine électrique (56) accouplée au système haute pression ;
une unité de stockage d'énergie électrique (55) pouvant être connectée électriquement à la machine électrique ; et
un dispositif de commande (72) configuré pour connecter électriquement l'unité de stockage d'énergie électrique (55) et la machine électrique (56) pour fournir de l'énergie électrique de la machine électrique (56) à l'unité de stockage d'énergie électrique (55) pendant un mode de fonctionnement de vol de la turbomachine et configuré en outre pour fournir de l'énergie électrique de l'unité de stockage d'énergie électrique (55) à la machine électrique (56) afin d'entraîner la machine électrique (56) de telle sorte que la machine électrique (56) entraîne le système haute pression à une vitesse de rotation variable pour empêcher ou corriger une condition de rotor courbé pendant un mode de fonctionnement après vol ou un mode de fonctionnement avant vol de la turbomachine.

12. Système de propulsion hybride-électrique (50) selon la revendication 11, comprenant en outre :
un ensemble propulseur électrique (200) pouvant être connecté électriquement à la machine électrique (56), dans lequel le dispositif de commande (72) est en outre configuré pour fournir à l'ensemble propulseur électrique (200) de l'énergie électrique provenant de l'une ou des deux de la machine électrique (56) et de l'unité de stockage d'énergie électrique (55) pendant le mode de fonctionnement en vol de la turbomachine.

13. Système de propulsion hybride-électrique (50) selon la revendication 11 ou 12, dans lequel le dispositif de commande (72) est en outre conçu pour fournir de l'énergie électrique de l'unité de stockage d'énergie électrique (55) à la machine électrique (56) pour entraîner la machine électrique (56) et corriger une condition de rotor courbé pendant le mode de fonctionnement avant le vol.

14. Système de propulsion hybride-électrique (50) selon l'une quelconque des revendications 11 à 13 dans lequel, en fournissant de l'énergie électrique de l'unité de stockage d'énergie électrique (55) à la machine électrique (56) pour entraîner la machine électrique (56) et empêcher ou corriger une condition de rotor courbé, le dispositif de commande (72) est configuré pour faire tourner le système haute pression de la turbomachine uniquement avec la machine électrique (56).
